## Europäisches Patentamt
## European Patent Office
## Office européen des brevets

(19)

(11) Veröffentlichungsnummer: **0 111 439**
**B1**

(12)

# EUROPÄISCHE PATENTSCHRIFT

(45) Veröffentlichungstag der Patentschrift:
**07.01.88**

(51) Int. Cl.⁴: **F 16 B 7/14**

(21) Anmeldenummer: **83710069.2**

(22) Anmeldetag: **07.10.83**

(54) **Langgestrecktes Konstruktionselement mit variierbarer Länge.**

(30) Priorität: **15.10.82 SE 8205865**

(43) Veröffentlichungstag der Anmeldung:
**20.06.84 Patentblatt 84/25**

(45) Bekanntmachung des Hinweises auf die Patenterteilung:
**07.01.88 Patentblatt 88/1**

(84) Benannte Vertragsstaaten:
**BE DE FR GB NL**

(56) Entgegenhaltungen:
**AT - B - 218 311**
**CH - A - 436 860**
**DD - A - 32 445**
**DE - A - 2 359 915**
**DE - B - 1 069 433**
**DE - C - 846 040**
**DE - C - 1 212 357**
**DE - U - 7 929 251**
**FR - A - 2 502 132**

(73) Patentinhaber: **ASEA AB, S-721 83 Västeras (SE)**

(72) Erfinder: **Westberg, Erik, Istidsvägen 24,
S-722 31 Västeras (SE)**

(74) Vertreter: **Boecker, Joachim, Dr.-Ing.,
Rathenauplatz 2-8, D-6000 Frankfurt a.M. 1 (DE)**

ACTORUM AG

**Beschreibung**

Die Erfindung betrifft ein langgestrecktes Konstruktionselement mit variierbarer Länge gemäss dem Oberbegriff des Anspruches 1. Ein solches Konstruktionselement ist bekannt aus der DE-A-23 59 915.

Als Beispiel für die Verwendung eines solchen Konstruktionselements können die Beine von Tischen mit senkrecht verstellbaren Tischplatten sowie teleskopierbare Roboter- und Kranarme genannt werden.

Das aus der DE-A-23 59 915 bekannte Konstruktionselement ist ein aus mehreren Teilen bestehender Teleskoparm mit als selbständige Teile ausgebildeten Nadelbandlagern zwischen den einzelnen koaxialen quadratischen Teleskoprohren. Um die Nadelbandlager an die Lagerflächen zweier benachbarter Teleskoprohre zur Anlage zu bringen, sind die am jeweils äusseren Rohr vorhandenen Lagerflächen über Tellerfedern relativ beweglich zu diesem äusseren Rohr ausgebildet, wobei die Tellerfedern diese Lagerflächen gegen die Nadellager drücken. Dieser Teleskoparm, der zum Tragen von Operationslampen, Strahlungsquellen usw. bestimmt ist, eignet sich nicht zum Tragen schwerer Lasten oder für Konstruktionen, in denen grosse Seitenkräfte auf den Arm auftreten können.

In der nicht vorveröffentlichten EP-A-0 074 019 ist offenbart, an teleskopierbaren Beinen für Pulte oder Tische mit senkrecht verstellbarer Pult- oder Tischplatte eine Streckenführung mit drei Stützrollen mit parallelen Wellen anzubringen, wobei die eine Rolle zur Einjustierung des Spiels zwischen den beiden Teilbeinen ansetzbar ist. Ein Nachteil dieser Konstruktion besteht jedoch in ihrem grossen Platzbedarf, da die Rollen verhältnismässig viel Raum erfordern. Ausserdem entsteht dadurch, dass die Rollen einer Seitenkraft ausgesetzt sind, eine zusätzliche Reibung und ein zusätzlicher Verschleiss. Die Konstruktion bedingt ausserdem einen verhältnismässig hohen Oberflächendruck in den Stützpunkten, was zur Folge hat, dass die Beine beispielsweise nicht aus Aluminium hergestellt werden können.

Es ist auch vorgeschlagen worden, zur Führung bei der Verschiebebewegung teleskopierbarer Beine der vorgenannten Art Gleitlager aus Tetrafluoräthylen-Kunststoff zu verwenden.

Bei dieser Ausführungsform entsteht jedoch eine zu hohe Reibung angesichts der Seitenkräfte, die in der Praxis von dem Bein aufgenommen werden müssen.

Es ist ferner bekannt, bei teleskopierbaren Armen für Industrieroboter, bei denen die beiden ineinander verschiebbaren Armteile einen im wesentlichen rechteckigen Querschnitt haben, senkrecht zueinander angeordnete Leitrollen an diagonal liegenden Ecken im Querschnitt zu verwenden. Diese Rollen sind in dem einen Armteil fest gelagert. Auch diese Konstruktion ist verhältnismässig platzraubend. Aus mechanischer Sicht besteht ferner der Nachteil, dass der Unterschied zwischen den Massen des inneren und des äusseren Armteils verhältnismässig gross ist.

Aus der FR-A-2 502 132 ist ein dem letztgenannten ähnliches Konstruktionselement bekannt, das aus einer Anzahl von Teleskoprohren besteht. Diese relativ dünnwandigen Teleskoprohre haben einen balkenkreuz-artigen Querschnitt, so dass die Arme dieses Balkenkreuzes für das nach aussen benachbarte Rohr als Führungsleiste und für das nach innen benachbarte Rohr als Führungsnut wirken. Die Lagerflächen weden – wie bei dem zuletzt beschriebenen Konstruktionselement – von Leitrollen gebildet, die in dem relativ äusseren Rohr ortsfest gelagert sind und gegen das relativ innere Rohr mit ihren Rollflächen anliegen. Auch diese Anordnung ist wegen der Unterbringung der Rollenlagerung relativ platzraubend.

Der Erfindung liegt die Aufgabe zugrunde ein Konstruktionselement der eingangs genannten Art zu entwickeln, bei dem die vorgenannten Nachteile nicht vorhanden sind.

Zur Lösung dieser Aufgabe wird ein langgestrecktes Konstruktionselement gemäss dem Oberbegriff des Anspruches 1 vorgeschlagen, welches erfindungsgemäss die im kennzeichnenden Teil des Anspruches 1 genannten Merkmale hat.

Vorteilhafte Ausgestaltungen der Erfindung sind in den weiteren Ansprüchen genannt.

Bei dem Konstruktionselement gemäss der Erfindung kann der Unterschied zwischen den Massen des inneren und des äusseren Rohres klein gehalten werden, wodurch bei gegebenen Abmessungen des Aussenrohres die Stabilität des Innenrohres grösser wird als bei den bekannten Konstruktionen. Ausserdem erhält man eine geringe Reibung und einen geringen Oberflächendruck, so dass es möglich ist, die Rohre aus stranggepressten Profilen aus Aluminium oder Kunststoff herzustellen.

Anhand der in den Figuren gezeigten Ausführungsbeispiele soll die Erfindung näher erläutert werden. Es zeigen

Fig. 1 in Seitenansicht ein Pult, dessen Teleskopbeine gemäss der Erfindung ausgebildet sind, wobei die Beine des Tisches im Axialschnitt und in voll eingefahrener Länge gezeigt sind,

Fig. 2 die gleiche Konstruktion wie Fig. 1 in gleicher Darstellung, jedoch mit voll ausgefahrenen Teleskopbeinen,

Fig. 3 eine Querschnitt durch eines der Teleskopbeine längs der Linie A–A in Figur 2,

Fig. 4 den in Figur 3 im Kreis B enthaltenen Teil im grösseren Massstab,

Fig. 5 einen Längsschnitt durch das Teleskopbein längs der Linie C–C in Figur 3 in voll eingefahrener Stellung des Beins,

Fig. 6 die gleiche Darstellung wie Figur 5, jedoch in voll ausgefahrener Stellung des Beins,

Fig. 7 einen Querschnitt durch ein Teleskopbein gemäss einer anderen Ausführungsform der Erfindung,

Fig. 8 in Draufsicht ein Bandelement eines bei der Erfindung verwendeten Nadelbandes.

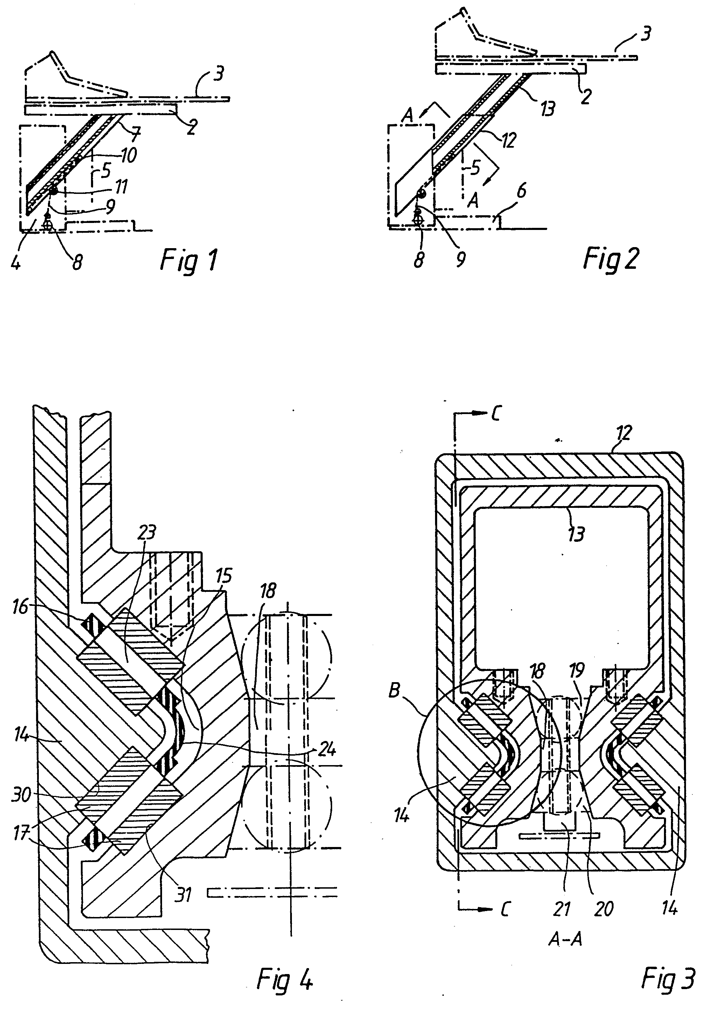

Das in den Figuren 1 und 2 gezeigte Pult enthält ein Oberteil mit Tragrahmen 2 und Pultplatte 3, ein Stativ mit zwei Tragstützen 4, von denen jede an einem Ende des Pultes angeordnet ist, sowie ein zwischen den Stützen angeordnetes Unterteil 5. Jede Stütze besteht aus einem Fuss 6 und einem Bein 7, dessen Länge veränderlich ist, so dass das Oberteil in verschiedene Höhenlagen gebracht werden kann. Figur 1 zeigt das Pult mit dem Oberteil in der unteren Endlage und Figur 2 in der oberen Endlage.

Die Antriebsanordnung zur Höheneinstellung der Pultplatte umfasst einen Elektromotor, der eine Antriebswelle 8 antreibt, auf die ein Band 9 aufgewickelt wird. Das Band ist an dem beweglichen Teil des Teleskopbeins befestigt und läuft über Umlenkrollen 10 und 11 zur Antriebswelle 8.

Das Bein 7 des Pultes, dessen Aufbau in den Figuren 3 bis 6 detaillierter gezeigt ist, besteht aus zwei Rohren oder ähnlichen Teilen, nämlich einem äusseren Rohr 12 und einem inneren Rohr 13, die beide einen im wesentlichen rechteckigen Querschnitt haben. Das innere Rohr 13 kann in Längsrichtung teleskopartig im äusseren Rohr 12 bewegt werden. In dem gezeigten Ausführungsbeispiel bestehen die Rohre aus stranggepressten Aluminiumprofilen. Auch anderes Material, z.B. Kunststoff, kann verwendet werden.

Wie aus Figur 3 ersichtlich, hat das äussere Rohr 12 in Längsrichtung verlaufende Führungsleisten 14 in Gestalt von zwei nach innen gerichteten, einander gegenüberliegenden Vorsprüngen mit einem im wesentlichen dreieckförmigen Querschnitt. Jeder dieser Vorsprünge passt in je eine im wesentlichen V-förmige in Längsrichtung der Rohre verlaufende Nut 15 des inneren Rohres 13. Zwischen den Vorsprüngen und den Wänden der Nuten 15 sind lineare Rollenlager in Form sogenannter Nadelbänder 16 angeordnet. Die Nadelbänder laufen auf Verschleissbahnen bildende Leisten 17, die beispielsweise aus Stahl oder Messing bestehen. Die Leisten 17 sind in Längsnuten 30, 31 in dem äusseren bzw. inneren Rohr fixiert. Wenn die Rohre 12, 13 aus einem Material bestehen, das bereits eine genügende Verschleissfestigkeit hat, sind besondere Leisten als Verschleissbahnen nicht erforderlich.

Das innere Rohr 13 hat einen Längsschlitz 18. Der Querschnitt dieses Längsschlitzes besteht aus einem Mittelabschnitt, an den sich auf der einen Seite ein zum Rohrinneren sich keilförmig erweiternder Abschnitt anschliesst und auf der anderen Seite ein sich zur Aussenseite des Rohres keilförmig erweiternder Abschnitt anschliesst. In den keilförmigen Abschnitten sind zwei Sprengleisten 19, 20 angeordnet, deren Querschnitt beispielsweise rund oder keilförmig sein kann. Die Sprengleisten sind nahezu genau so lang, wie das innere Rohr und sind mittels Schrauben 21 in einem Abstand von ca. 10 cm miteinander verbunden. Durch Anziehen der Schrauben werden die Sprengleisten 19, 20 gegeneinander gezogen, wodurch das innere Rohr seitlich expandiert (gespreizt wird) und die Rollenlager zur Anlage gebracht werden. Hierdurch erreicht man eine spielfreie Führung der Teleskopbewegung mit einer praktisch vernachlässigbaren Reibung. Durch diese Anordnung werden auch Massabweichungen der Rohre kompensiert, und man erhält eine Lagerung mit grosser Tragfläche, wodurch verhältnismässig grosse Querkräfte aufgenommen werden können.

Um trotz der durch das Anziehen des Expansionselementes verursachten Verformung des inneren Rohres eine Parallelität zwischen den sich jeweils gegenüberliegenden Verschleissbahnen 17 und damit eine gute Anlage zwischen den Verschleissbahnen und den Rollen 23 zu erreichen, wird eine der Leisten 17 jedes Paares von Verschleissbahnen und/oder die Nut, z.B. die Nut 31, in welcher diese Leiste angebracht ist, so ausgebildet, dass die Leiste um einen kleinen Winkel um ihre Längsachse kippen kann. Zweckmässigerweise wird dies dadurch verwirklicht, dass die Nut 31 mit einem schwach gewölbten Boden ausgebildet wird, wobei die Leiste 17 einen rechteckigen Querschnitt haben kann.

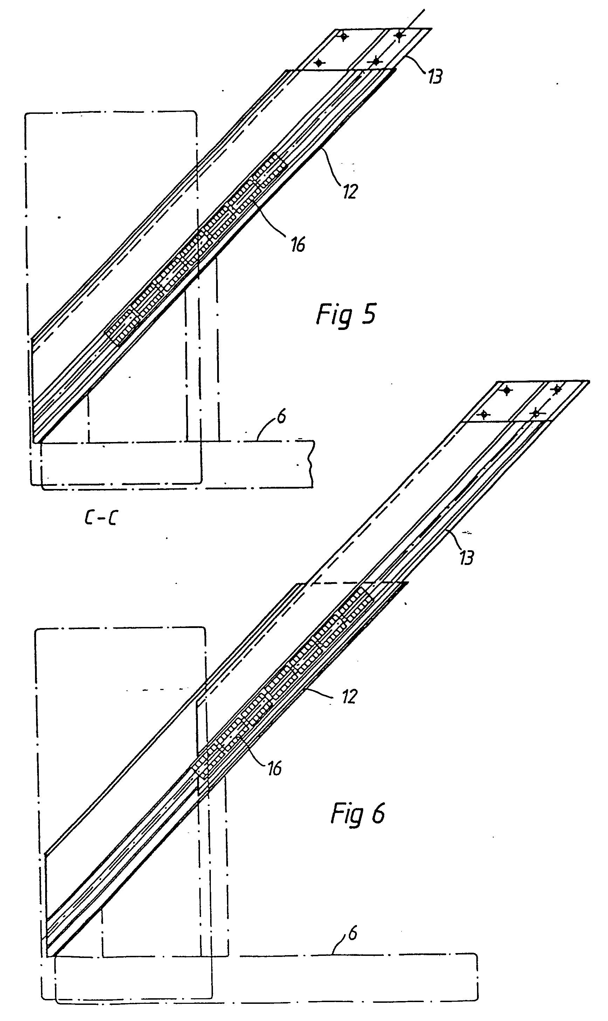

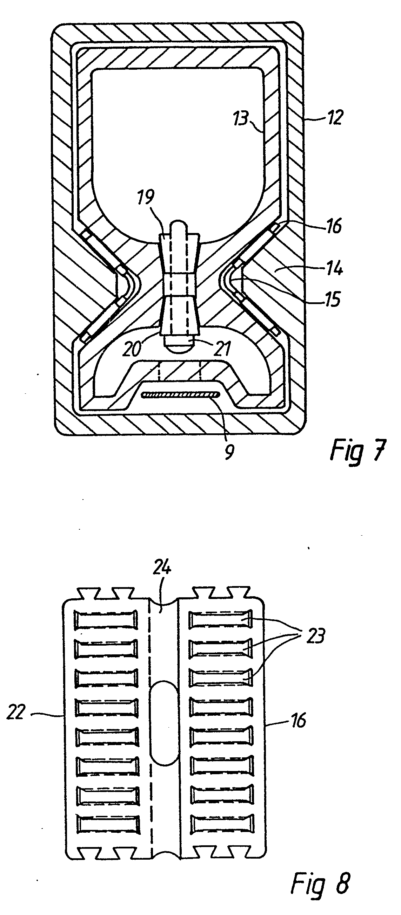

Die Nadelbänder 16, die handelsüblicher Art sein können, bestehen aus mehreren Elementen der in Figur 8 gezeigten Art. Das Element besteht aus einem im wesentlichen rechteckigen Halter 22 aus Kunststoff, der Halter ist mit schwalbenschwanzförmigen Nuten bzw. Vorsprüngen versehen, die es ermöglichen, eine beliebige Anzahl solcher Elemente in einer Reihe miteinander zu verbinden. Aus den Figuren 5 und 6 geht hervor, dass im gezeigten Ausführungsbeispiel jedes Nadelband aus sieben der eben beschriebenen Elemente besteht. Zwischen den Rollenreihen hat der Halter 22 ein elastisches Zwischenteil 24, das so gebogen werden kann, dass die Rollenreihen jeden gewünschten Winkel zueinander einnehmen. In dem Ausführungsbeispiel beträgt dieser Winkel 90° (Fig. 4). Die Nadelbänder werden in Längsrichtung durch den Lagerdruck in ihrer Lage gehalten, der beim Anziehen der Schrauben 21 auftritt. Wie aus den Figuren 5 und 6 hervorgeht, ist die Verschiebung der Nadelbänder in Längsrichtung der Rohre halb so gross wie die Verschiebung des inneren Rohres 13.

Das innere Rohr 13 braucht nicht notwendigerweise aus einem offenen Profil zu bestehen. Es kann auch mit geschlossenem Profil ausgeführt sein, wie dies das Ausführungsbeispiel in Figur 7 zeigt. Bei diesem Ausführungsbeispiel fehlen ausserdem die Verschleissbahnen 17. Im übrigen unterscheidet sich diese Ausführungsform im Prinzip nicht von der zuvor beschriebenen.

Aus mechanischer Sicht ist es zweckmässig, die Lagerungen und das Expansionselement nicht in der Mitte der Rohrprofile anzubringen, sondern sie soweit wie möglich an die eine Schmalseite des Aussenrohres zu verlegen. Dadurch erhält man das kleinstmögliche Ausbeulen der Aussenprofile der Rohre beim Anziehen des Expansionselementes.

Die Erfindung ist nicht auf die gezeigten Ausführungsbeispiele beschränkt, sondern kann im Rahmen des offenbarten allgemeinen Erfindungsgedankens in vielfacher Weise modifiziert werden.

So kann zum Beispiel – anders als in den gezeigten Ausführungsbeispielen – das innere Rohr fest und das äussere Rohr verschiebbar angeordnet sein. Ferner können die Führungsleisten 14 am inneren Rohr und die Führungsnuten 15 am äusseren Rohr vorgesehen sein. Die beiden Führungsbahnen auf derselben Seite des Expansionselementes brauchen auch nicht miteinander verbunden zu sein, und der Winkel zwischen diesen Lagerbahnen kann einen anderen Wert als 90° haben.

Die Anwendungsmöglichkeit der Erfindung ist nicht auf teleskopierbare Beine für Pulte beschränkt. Im Prinzip kann dieselbe Konstruktion beispielsweise für Teleskoparme von Industrierobotern, Teleskopauslegern von Kranen usw. verwendet werden. Für Roboterarme ist das Konstruktionselement gemäss der Erfindung besonders vorteilhaft, da die Lager wegen der geringen Trägheitsmomente der Rollen grosse Beschleunigungen bzw. Verzögerungen zulassen.

**Patentansprüche**

1. Langgestrecktes Konstruktionselement mit variierbarer Länge, mit einem inneren Rohr (13) und einem äusseren Rohr (12), von welchen das eine Rohr in oder auf dem anderen Rohr teleskopartig verschiebbar ist, mit Lagerungen zur Führung der axialen Bewegung des verschiebbaren Rohres und zur Aufnahme der auf dieses Rohr wirkenden Transversalkräfte, mit linearen Rollenlagern (16) zwischen den Lagerflächen des inneren und des äusseren Rohres und mit mindestens einem Expansionselement (19, 20, 21), welches für eine Anlage der Rollenlager (16) an den Lagerflächen des inneren und des äusseren Rohres sorgt, dadurch gekennzeichnet, dass auf zwei gegenüberliegenden Seiten des einen Rohres (12) in Längsrichtung des Rohres verlaufende Führungsleisten (14) und in dem anderen Rohr (13) den Führungsleisten (14) angepasste Führungsnuten (15) vorhanden sind, dass die linearen Rollenlager (16) zwischen den Führungsleisten und den Wänden der Führungsnuten angeordnet sind, und dass das mindestens eine Expansionselement (19, 20, 21) derart angeordnet ist, dass es durch Expansion des inneren Rohres (13) die Anlage der Rollenlager (16) an den Lagerflächen des inneren und des äusseren Rohres herbeiführt.

2. Konstruktionselement nach Anspruch 1, dadurch gekennzeichnet, dass die Führungsleisten (14) zwei auf dem äusseren Rohr (12) angeformte, einander gegenüberliegende und nach innen gerichtete Vorsprünge sind, die in nach aussen gerichtete V-förmige Nuten (15) in dem inneren Rohr (13) hineinpassen.

3. Konstruktionselement nach Anspruch 1 oder 2, dadurch gekennzeichnet, dass die genannten Rollenlager sog. Nadelbänder (16) sind, die mehrere in einem langgestreckten, flachen Halter (22) parallel nebeneinander und mit ihren Achsen senkrecht zur Längsrichtung des Halters angeordnete Rollen (23) enthalten.

4. Konstruktionselement nach Anspruch 3, dadurch gekennzeichnet, dass die Nadelbänder (16) aus zwei nebeneinander angeordneten Bandhälften bestehen, von denen jede eine Reihe der genannten Rollen (23) enthält, und dass die Bandhälften durch ein elastisches Zwischenteil (24) derart miteinander verbunden sind, dass das Band zur Anpassung an die Lage der Führungsleisten (14) zu einem V-Profil biegbar ist.

5. Konstruktionselement nach einem der vorhergehenden Ansprüche, dadurch gekennzeichnet, dass zu den genannten Expansionselementen mindestens eine Sprengleiste (19) gehört, die in einem Längsschlitz (18) des inneren Rohres (13) angeordnet ist, und dass die Leiste auf mindestens einer Gewindeschraube (21) sitzt, bei deren Anziehen die Sperrleiste (19) eine Expansion des inneren Rohres (13) erzwingt.

6. Konstruktionselement nach einem der Ansprüche 1 bis 4, dadurch gekennzeichnet, dass das innere Rohr (13) einen Längsschlitz (18) hat, dessen Querschnitt sich von einem Mittelabschnitt aus sowohl zur Innenseite wie zur Aussenseite des Rohres hin keilförmig erweitert, und dass zu dem genannten Expansionselement zwei in den genannten keilförmigen Erweiterungen angeordnete Sprengleisten (19, 20) gehören, die durch Schrauben (21) miteinander verbunden sind, mit deren Hilfe die Sprengleisten in Richtung zueinander ziehbar sind.

7. Konstruktionselement nach einem der vorhergehenden Ansprüche, dadurch gekennzeichnet, dass die Rollenlager Verschleissbahnen in Form von Leisten (17) haben, die in Längsnuten (30, 31) in den beiden Rohren fixiert sind, und dass wenigstens eine der Leisten in jedem Paar von Verschleissbahnen und/oder die Nut (z.B. 31), in welcher diese Leiste angebracht ist, derart beschaffen ist, dass die Leiste um einen gewissen kleinen Winkel um ihre Längsachse kippbar ist.

8. Konstruktionselement nach Anspruch 7, dadurch gekennzeichnet, dass der Boden der Nut (31) schwach gewölbt ist, während die Leiste (17) einen rechteckigen Querschnitt hat.

**Claims**

1. Extended construction element of variable length with an inner tube (13) and an outer tube (12), one of the tubes being telescopically displaceable in or on the other tube, with bearings to guide the axial movement of the displaceable tube and to absorb the transversal forces applied on this tube, railwith linear roller bearings (16) between the bearing surfaces of the inner and the outer tube and with at least one expansion element (19, 20, 21) providing for abutment of the roller bearings (16) against the bearing surfaces of the inner and the outer tube, characterized in that railguiding rails (14) are arranged on two opposite sides of one tube (12) extending in the longitudinal direction of said tube while the other tube (13) is provided with guiding slots (15) matched for said guiding rails (14), railthat the linear roller bearings (16) are arranged between the guiding rails and the walls of the guiding slots, and railthat said at least one expansion element (19, 20, 21) is arranged such as to cause, through expansion of the inner tube (13) the abutment of the roller bearing (16) on the bearing surfaces of the inner and the outer tube.

2. Construction element according to Claim 1, characterized in that the guiding rails (14) consist of two opposing and inwardly extending projections formed to the outer tube (12), these projections matching into outwardly facing V-shaped slots (15) in the inner tube (13).

3. Construction element according to Claim 1 or 2, characterized in that said roller bearings are socalled needle bands (16) comprising several rollers (23) arranged in parallel and side by side in a holder with their axes extending perpendicular to the longitudinal direction of the holder.

4. Construction element according to Claim 3, characterized in that the needle bands (16) consists of two band halves arranged side by side each half including one row of said rollers (23) and that railthe band halves are connected with each other by an intermediate member (24) such that the band can be bent into a V-profile to fit the position of the guiding rails.

5. Construction element according to any of the preceding Claims, characterized in that said expansion element includes at least one spreading bar (19) accommodated in a longitudinal slot (18) in the inner tube (13), and that said bar is arranged on at least one threaded bolt (21) which on its tightening causes the spreading bar (19) to enforce an expansion of the inner tube (13).

6. Construction element according to any of Claims 2 to 4, characterized in that the inner tube (13) is provided with a longitudinal slot (18) which expands conically from a mid-section towards the inner side as well as towards the outer side of the tube, and that said expansion element includes two spreading bars (19, 20) accommodated in said wedge-like expansions, the two spreading bars being connected with one another by screws (21) with the help of which the spreading bars can be pull towards one another.

7. Construction element according to any of the preceding Claims, characterized in that the roller bearings include wearing rails in the form of bars (17) fixed in longitudinal slots (30, 31) on the two tubes, and that at least one bar of each pair of wearing rails and/or the slot (for example 31) which accommodates said bar, is adapted to allow the bar to tilt at a certain small angle about its longitudinal axis.

8. Construction element according to Claim 7, characterized in that the bottom of the slot (31) is slightly arched while the bar (17) has a rectangular cross-section.

**Revendications**

1. Elément de construction allongé de longueur variable, comportant un tube intérieur (13) et un tube extérieur (12), dont l'un d'eux peut être déplacé de façon télescopique dans ou sur l'autre tube, des supports servant au guidage lors du déplacement axial du tube déplaçable et servant à absorber des forces transversales agissant sur ce tube, des roulements linéaires à rouleaux (16) situés entre les surfaces de support du tube intérieur et du tube extérieur et au moins un élément d'écartement (19, 20, 21), qui garantit l'application des roulements à rouleaux (16) sur les surfaces de support du tube intérieur et du tube extérieur, caractérisé par le fait qu'il est prévu, sur deux côtés opposés d'un tube (12), des barrettes de guidage (14) s'étendant dans la direction longitudinale du tube et, dans l'autre tube (13), des rainures de guidage (15) adaptées aux barrettes de guidage (14), que les roulements linéaires à rouleaux (16) sont disposés entre les barrettes de guidage et les parois d'une rainure de guidage et qu'au moins un élément d'écartement (19, 20, 21) est disposé de telle sorte qu'il réalise, sous l'effet de la dilatation du tube intérieur (13), l'application des roulements à rouleaux (16) contre les surfaces de soutien du tube intérieur et du tube extérieur.

2. Elément de construction suivant la revendication 1, caractérisé par le fait que les barrettes de guidage (14) sont constituées par deux parties saillantes formées par façonnage sur le tube extérieur (12), disposées en vis-à-vis l'une de l'autre et dirigées vers l'intérieur et qui s'adaptent dans des rainures en forme de V (15) dirigées vers l'extérieur et ménagées dans le tube intérieur (13).

3. Elément de construction suivant la revendication 1 ou 2, caractérisé par le fait que lesdits roulements à rouleaux sont ce qu'on appelle des bandes à aiguilles (16), qui contiennent plusieurs rouleaux (23) disposés parallèlement et côte-à-côte dans un support plat et allongé (22) et dont les axes sont perpendiculaires à la direction longitudinale des supports.

4. Elément de construction suivant la revendication 3, caractérisé par le fait que les bandes à aiguilles (16) sont constituées par des moitiés de bandes disposées côte-à-côte et dont chacune contient une série desdits rouleaux (23), et que les moitiés de bande sont reliées entre elles par un organe intermédiaire électrique (24) de telle sorte que pour l'adaptation à la position des barrettes de guidage (14), la bande peut être pliée de manière à posséder un profil en V.

5. Elément de construction suivant l'une des revendications précédentes, caractérisé par le fait que lesdits éléments d'écartement comprennent au moins une barrette d'écartement (19), qui est disposée dans une fente longitudinale (18) du tube intérieur (13) et que la barrette est en appui sur au moins une vis (21), lors du serrage de laquelle, la barrette d'écartement (19) impose un écartement du tube intérieur (13).

6. Elément de construction suivant l'une des revendications 1 à 4, caractérisé par le fait que le tube intérieur (13) possède une fente longitudinale (18), dont la section transversale s'élargit avec une forme de coin à partir d'une section centrale aussi bien vers le côté intérieur que vers le côté extérieur du tube et que ledit élément d'écartement contient deux barrettes d'écartement (19, 20) qui sont disposées dans lesdites parties élargies en forme de coin et qui sont reliées entre elles par des vis (21), à l'aide desquelles les barrettes d'écartement peuvent être rapprochées l'une de l'autre.

7. Elément de construction suivant l'une des revendications précédentes, caractérisé par le fait que les roulements à rouleaux possèdent des voies d'usure sous la forme de barrettes (17) qui sont fixées dans les rainures longitudinales (30, 31) dans les deux tubes, et qu'au moins l'une des barrettes de chaque couple de voies d'usure et/ou la rainure (par exemple 31), dans laquelle cette barrette est montée, est créée de telle sorte que la barrette peut basculer sur un certain angle réduit autour de son axe longitudinal.

8. Elément de construction suivant la revendication 7, caractérisé par le fait que le fond de la rainure (31) est légèrement cintré, tandis que la barrette (17) possède une section transversale rectangulaire.

*Fig 1*

*Fig 2*

*Fig 4*

*Fig 3*

A-A

C-C

Fig 5

Fig 6

*Fig 7*

*Fig 8*